# EUROPEAN PATENT SPECIFICATION

(11) **EP 2 460 924 B1**
(45) Date of publication and mention of the grant of the patent: **17.03.2021**
(21) Application number: 11191243.2
(22) Date of filing: 30.11.2011
(51) Int. Cl.: D06F 37/26

(54) **Method for manufacturing a tub section for a washing machine**
Verfahren zur Herstellung eines Laugenbehälterabschnitts für eine Waschmaschine
Procédé de fabrication d'une section de tube pour machine à laver

(30) Priority: 06.12.2010 ES 201031807
(43) Date of publication of application: 06.06.2012
(73) Proprietor: BSH Hausgeräte GmbH, 81739 München (DE)
(72) Inventor: Gomez Caudevilla, Miguel Angel, 50007 Zaragoza (ES); Gracia Bobed, Ismael, 50194 Zaragoza (ES); Martinez Perez, Gerardo, 50015 Zaragoza (ES); Recio Ferrer, Eduardo, 50013 Zaragoza (ES)

(56) References cited:
- EP-A1- 2 248 936
- EP-A2- 0 219 115
- WO-A2-2010/010114

## Description

The invention relates to a method for manufacturing a tub section, in particular a rear tub section, for a washing machine. Further, the invention relates to a hub assembly and to a tub section, in particular a rear tub section, for a washing machine.

Currently, most domestic washing machines are made of plastic material(s), except for the ball bearings, which are made of metal.

Document WO 2007/115894 A1 describes a tub of this generic class for a laundry washing machine, of the domestic type in particular, which houses a rotating drum inside of which the wash load is placed, with said washer tub consisting of a peripheral cylindrical shell formed by a front tub section and a rear tub section, which are joined at their respective plastic material edges, enclosing the drum within them, by fusion welding the plastic materials of said edges, forming a weld bead between the front tub section and the rear tub section with the edges bonded along at least two bond lines.

Document WO 2007/115904 A1 discloses a tub for a laundry washing machine, of the domestic type in particular, having a tub which houses a rotating drum within which the wash load of laundry is placed, with said tub consisting of a peripheral cylindrical shell formed by a front tub section and a rear tub section, which are united, enclosing the drum inside them, by plastic fusion welding, wherein the front tub section has at least one front rim and the rear tub section has at least one rear rim, which face each other when the tub is closed and to which a damper or shock absorber is fastened by means of a stud, wherein the stud is made integrally with one of the rims and it is joined to the other rim by plastic fusion welding.

Commonly, a plastic formulation is used for manufacturing a tub section that includes a polypropylene (PP) base combined with a filler material such as talc or fibreglass. Ordinarily, talc is used as a filler material in low speed washing machines and fibreglass in high rpm machines.

Since the tub supports the washing machine's rotating drum, the tub ordinarily includes two tub sections, namely, a front section and a rear section, which are joined to each other after the drum has been inserted. The rear tub section normally is the one that has greater strength requirements, since it supports the bearing hub which, on the hand, is part of a ball bearing that carries a drive shaft for the drum to turn it. The front and rear tubs are injected together at the same time in two different cavities milled in the same mould.

During the manufacturing process, the most common technique is to inject said plastic formulation (PP + filler) through the bearing retainer; this retainer (or "carrier") itself acts as a core for the assembly, and a metal-plastic bond is achieved at the interface of the two materials. In order to fasten the injected plastic formulation to the metal of the bearing hub adequately, the surface of the bearing hub is provided with numerous grooves to obtain enough adhesion. In order to avoid thermal shock when the plastic injection is performed next to the metal bearing hub, the latter needs to be heated ahead of time to a temperature of 40 to 60°C before placing it inside the mould. Since the bearing hub is made of metal, ordinarily of Zamak or steel, its size and weight are directly related to the speed that the drum needs to rotate. For this reason, the bearing hub needs to be larger for high speeds than for low speeds, and its weight ranges from one kilogram for the smallest ones, up to two kilograms for the largest. This amount of hot steel, in addition to approximately six litres of PP at 240°C, with geometry full of very thick regions, creates some intensely hot zones.

This may lead to unwanted consequences. Among these disadvantages are a possibly unsatisfactory level of dimensional stability due to differences in coefficients of contraction of the materials and in their cooling curves, and the different densities of the metal and the plastic. This can in particular result in the generation of micro-pockets between the plastic and the metal, causing poor adhesion. Along with this, a cooling time of more than 8 hours may be required, which negatively affects the entire process (the steel acts like a hot core that retains the heat for a long time as if it were a thermos flask). In addition, due to the extended cooling time, it is necessary to store recently injected tubs for many hours, which increases costs.

In document WO2010/010114 A1 a method is described for manufacturing a washing machine tub section that includes a bearing housing, wherein the method comprises the following steps: manufacture a first product that comprises the bearing housing and a plastic cover which, via injection of plastic over the bearing housing, covers at least the side surface of the bearing housing; manufacture a second pre-product of plastic that comprises an receptacle region to receive the first pre-product; and bind the first pre-product to the second pre-product to form the tub section. This method has the disadvantage that the manufacturing time for the first pre-product increases the total manufacturing time for the tub section.

The objective of the present invention is to reduce or avoid one or more of the problems laid out above, and in particular provide for a tub that is more economical to manufacture and/or more reliable than previous tubs.

This objective is achieved by a manufacturing method for a tub section, in particular for a rear tub section, using a tub section hub assembly, in particular for a rear tub section, for a washing machine according to the corresponding independent claim. Advantageous embodiments are disclosed in the dependent claims in particular, as well in the subsequent description and in the attached drawing.

In general, the objective is achieved by separately creating a high strength region in the neighbourhood of the bearing hub of a tub section and a low strength region in the remainder of the tub.

As one aspect of the invention, a method is provided for manufacturing a washing machine tub section that comprises a plastic tub inside of which a rotating drum can be housed whose shaft of rotation rests on bearings provided in the inner wall of a bearing hub made of metal wherein the tub is mounted radially on the outer surface of the bearing hub by a plastic injection process, and wherein between the outer surface of the bearing hub and the tub there is a sleeve made of plastic material. The method comprises the steps of moulding the sleeve made of plastic material, installing the sleeve tightly over the outer surface of the bearing hub forming a bearing assembly, and injecting the plastic tub over the bearing assembly.

By such method, a high mechanical load region around the bearing can be designed for specifications differing from those of the rest of the tub. Accordingly, in order to mould the sleeve around the bearing hub, a small amount of a relatively expensive but strong material can be used to satisfy the durability and reliability requirement, while a larger amount of cheap material can be used for the remainder of the tub making the design cheaper overall. Other advantages are described below. Since the amount of plastic material injected for the sleeve placed over the bearing hub is much less than in the conventional process, most negative effects from thermal shock are eliminated, and cooling becomes extremely fast, while dimensional stability is greatly improved due to reduced micro-pockets. Moreover, the sleeve can be manufactured and installed over the bearing hub cold, and the hub assembly inserted immediately into the injection moulding machine for the remainder of the half tub.

Preferably, the plastic sleeve also covers at least the front surface and/or the rear surface of the bearing hub.

Preferably, the plastic sleeve of the bearing assembly and the remainder of the plastic half tub are made up of the same base product for example, PP, PEEK, and PTFE, where the plastic sleeve of the bearing assembly is preferably made of stronger material by containing a greater concentration, that is percentage by volume, or a better type (talc compared to fibres, for example) of a reinforcing filler material than the rest of the tub section. The remainder of the tub section may contain no reinforcing filler material. The bearing assembly of a tub section, in particular of the rear washing machine tub section, comprises only one part of the tub section, which includes a bearing hub and a plastic sleeve that covers at least the side surface of the bearing hub.

Preferably, the plastic sleeve covers at least the outer surface of the bearing hub, that is, the side surface, front surface and rear surface.

Preferably, the method in addition includes the step, before installing the sleeve, of applying an adhesive, silicone in particular, between the outer surface of the bearing hub and the inner face of the sleeve. In this way, gaps left between the sleeve and the outer surface of the bearing hub are eliminated.

In one embodiment, the method provides that the step of moulding the sleeve be achieved by a plastic extrusion process, and the step of installing the sleeve be achieved by a heat shrink process tightening the sleeve around the contours of the outer surface of the bearing hub. The sleeve is of a material made in part of a heat shrink plastic, which is cut and heated on the hub until it fits tightly over it.

As mentioned previously, another way to achieve the sleeve is by a sleeve moulding step employing a plastic injection process by which its inner surface is formed so as to interlock with the outer surface of the bearing hub.

Another object of the invention is to provide a tub section, in particular a rear tub section, for a washing machine that includes a plastic region around a bearing hub, so that the plastic region includes at last two sub-regions with different mechanical strength, wherein the sub-region with the higher mechanical strength is located around the bearing hub like a sleeve.

In one embodiment of the sleeve, it is a tube of heat shrink plastic material which when shrunk onto the bearing hub forms the hub assembly.

Alternatively, the sleeve is achieved by a plastic injection process as a tub with an inner surface interlocking with the outer surface of the bearing hub and which can be closed over the bearing hub, forming a bearing assembly.

To improve the bond with the remainder of the plastic material of the tub section, the sleeve has ridges on its outer surface that strengthen the bond with the tub.

The sleeve covers the entire outer surface of the bearing hub and at least part of its opening and seal region.

Preferably, the proportion of the total volume occupied by the sub-region of the sleeve having higher mechanical strength than the sub-region with low mechanical strength lies within the range of 5% to 45%, and in particular within the range of 30% to 40%.

In general, the invention has at least the following advantages:
The stronger, more expensive material is used only in high load areas, thereby saving expensive material. Reinforcement by using, for example, fibreglass or talc filler, is needed only around the bearing hub with a fraction of the total plastic volume, for example, a litre of reinforced plastic material instead of the 6 litres used for the tub in a conventional process.

Rejection of the entire tub section is avoided in the event of defects in the neighbourhood of the bearing housing. Instead, only the pre-product has to be rejected.

The invention allows increasing the drum rpm due to the possible and not excessively costly increase in the strength of the plastic near the bearing housing area.

The process can be carried out automatically.

It is possible to reduce micro-holes between the metal, in particular steel, and the plastic surfaces caused by shrinkage.

It is possible to obtain a good welded-plastic bond to both materials of the hub assembly and remainder of the half tub, in particular it they have the same plastic base material, for example, PP.

Thermal isolation of the carrier bearings is provided for in the tub injection process.

Size and internal defects resulting from shrinkage are improved.

Better dimensional stability of the tub is obtained, since there is less thermal deformation.

Greater dimensional stability is obtained by the ridges being larger in size.

Mean power consumption for product stabilization is reduced, since the cooling time is much shorter with it not being necessary to preheat the bearing hub.

A requirement is met for maximizing wheel bearing and joint seal quality. Since the entire hub assembly can be installed by the dealer providing these components, quality parameters can be more demanding.

Next, preferred embodiments of the invention will be described in greater detail with reference to the attached drawing. It should be understood that the description of preferred embodiments is not intended to limit the invention.

In order to complement the subsequent description, and to give a better understanding of the invention, a drawing comprising a set of diagrammatic figures showing preferred embodiments is attached. Same reference numerals are used for components that are identical or similar across the figures. In the drawing,
- FIGURE 1: shows a diagrammatic cross section of a tub for a laundry washing machine,
- FIGURE 2A: shows an image of a part of the rear tub section of figure 1,
- FIGURE 2B: shows the bearing hub,
- FIGURE 2C: shows part of the outer tub section of figure 2A,
- FIGURE 3: shows a diagrammatic transverse cross-sectional view of the upper half of the hub assembly of figure 4,
- FIGURE 4: shows a rear tub section assembled according to the invention,
- FIGURE 5A: shows a bearing hub assembly covered with a sleeve,
- FIGURE 5B: shows the sleeve part of figure 5A,
- FIGURE 5C: shows the other sleeve part of figure 5A,
- FIGURE 6: shows a rear tub section, and
- FIGURE 7: shows another embodiment of the sleeve.

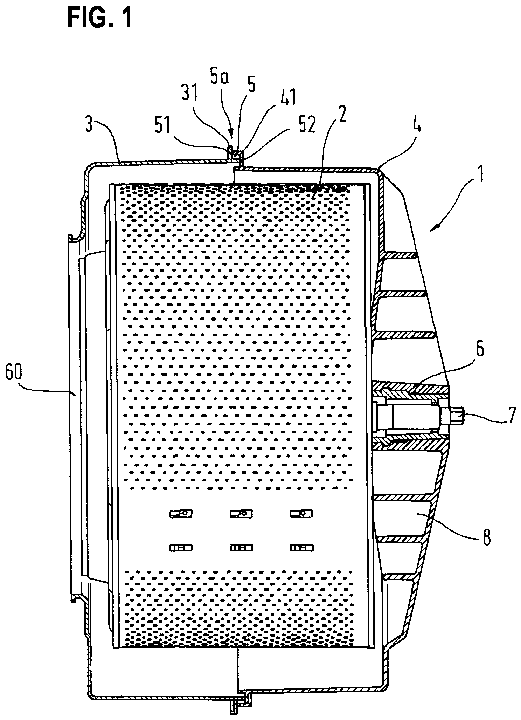

FIGURE 1 shows a diagrammatic cross section of a tub 1 for a laundry washing machine, of the domestic type in particular, which houses a rotating drum 2 inside which the wash load is placed. The washing machine is of the front loading type, with an opening 10 in the front section of the tub 3 for inserting the wash load. The tub 1 is manufactured from plastic by injection moulding and includes an outer cylindrical shell made in two parts, a front tub section 3 and a rear tub section 4, which are bonded together along their respective open edges 31, 41, enclosing the drum 2 inside them, by fusion welding the plastic materials on their edges 31, 41, producing a weld bead 5a between the front tub section 3 and the rear tub section 4. The method for closing up said tubs by welding is the friction welding method. The edges 31, 41 are bonded along at least two bond lines 51, 52, forming a chamber 5 between the edges 31, 41 along the perimeter of the weld bead 5a.

A metal ball bearing, of which only the bearing hub 6 is shown, is positioned in the centre of the rear tub section 4. The remainder of the rear tub section 4 is formed by a plastic region 8 that surrounds the bearing hub 6. The ball bearing supports a transmission shaft 7 that turns the drum 2.

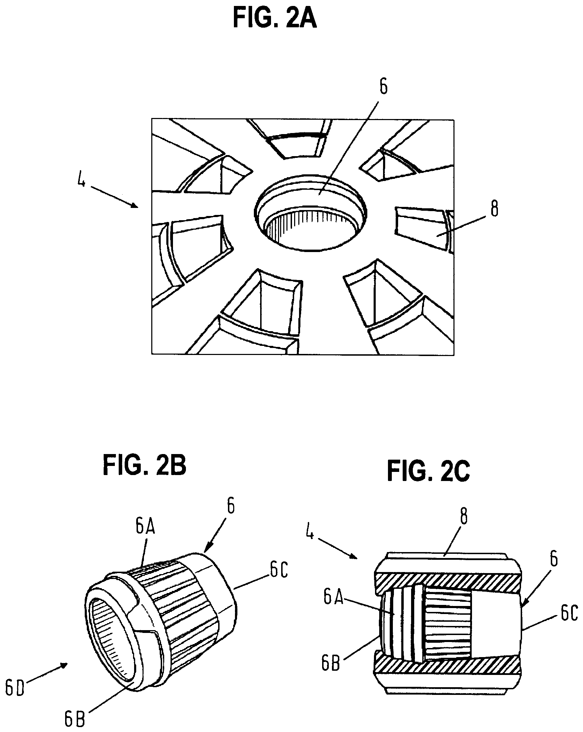

FIGURE 2A shows an image of a part of the rear tub section of FIGURE 1 with a bearing hub (also called a "carrier") 6 and the plastic tub region 8 formed around it. Ordinarily, the carrier 6 is positioned in the centre of the mould in which the plastic formulation for the plastic region 8 is injected. FIGURE 2B shows the bearing hub 6 alone with its side surface 6A, its front surface 6B, its rear surface 6C (the "outer surface" of the bearing hub 6), and its through hole (inner surface) 6D adapted for housing the balls and the transmission shaft. FIGURE 2C shows part of the outer tub section 4 of FIGURE 2A with the metal bearing hub 6 exposed. The plastic tub region 8 has been cut to check the quality of the bond between plastic and metal.

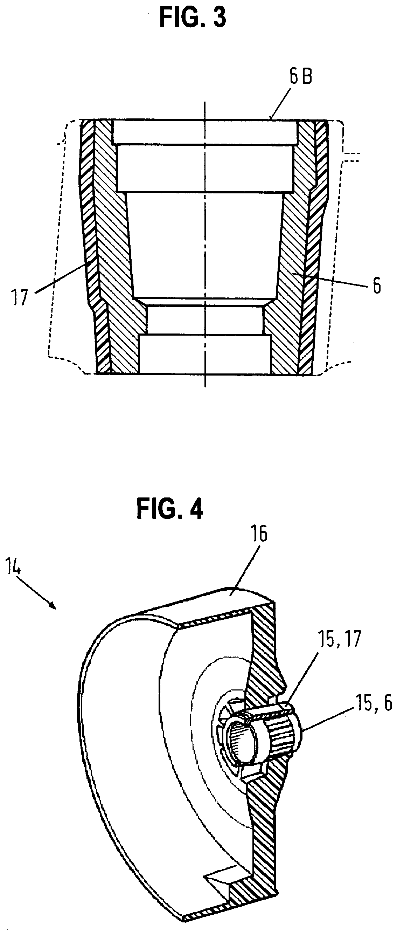

FIGURE 3 shows a diagrammatic transverse cross-sectional view of the upper half of the hub assembly 15 of FIGURE 4 before assembly with the remainder of the tub section. The plastic sleeve 17 is made as a tube of heat shrink material tightly fit onto the outer surface of the bearing hub.

The corresponding plastic sleeve 9 only has a fraction of the volume (or weight) of the entire plastic region of the rear tub section, preferably 5% to 45%, in particular 10% to 40%, and even more preferably 30% to 40%, for example, about a litre of material. The amount can vary with the size of the bearing hub: when the bearing hub is larger, the fraction can be lower to maintain a constant outer dimension, for example.

In another embodiment, the material of the plastic sleeve can exhibit a mechanical strength greater than the material of the remainder of the tub section. In particular, the plastic sleeve of the hub assembly can contain a PP polymer base (matrix), with a higher filler material concentration (for example, talc and / or fibreglass) compared to the remainder of the plastic tub section, for example, the remainder of the tub section. Depending on the load needed, such as the desired drum rotation speed (600, 1,000, 1,200 rpm, etc.), the type and amount(s) of reinforcing filler material(s) are chosen before injection moulding. For example, the plastic sleeve can contain PP with fibreglass and/or talc as a reinforcing filler for 600 rpm, PP and 15% fibreglass for 1,000 rpm, and PP and 30% fibreglass for 1,400 rpm.

The remainder of the tub section (not shown) can also be manufactured independently starting with the hub assembly (together with the front tub section if appropriate) so that the rear tub section can be produced without needing to include any metal volume. Thus, it includes a connecting region (which includes the bond line, etc.) in order to connect with the front tub section, but it does not include the bearing hub (metal). In this way, cooling times are significantly improved, since heat dissipation is much faster due to the absence of a metal core. Deformations also are smaller, and immediate use of the remainder of the tub section is possible after this step.

The remainder of the tub section can include in particular the same polymer base as the plastic of the hub assembly but with a lower filler concentration. This includes the case where no filler material is added to improve mechanical strength. The material for the remainder of the tub section is consequently cheaper but can be connected correctly to the hub assembly by having the same base material, such as PP.

FIGURE 4 shows a rear tub section 14 assembled according to the invention with a hub assembly 15 coupled with the remainder of the tub section 16, as will be explained in greater detail below. The remainder of the tub section 16 has been cut in half in order to expose the hub assembly 15, which in turn has a plastic sleeve 17 that has been cut in order to expose the underlying bearing hub 6.

By selecting the plastic sleeve 17 material so that it will have greater mechanical strength than the material of the remainder of the tub section 16, the space occupied by plastic in the rear tub section 14 comprises two sub-regions 16, 17 with different mechanical strengths, so that the sub-region with the higher mechanical strength (the plastic sleeve) 17 is located around the bearing hub 6. Using such a design, manufacturing costs can be reduced since it is possible for only the plastic sleeve 17 to be composed of more expensive stronger material, while the remainder of the plastic region, that is, the remainder of the tub section 16, is made of less expensive plastic material. At the same time, the mechanical strength of the tub section 14 is as good as if its plastic region had been manufactured entirely of higher strength material. Even better, the costs of reinforcing the sleeve 17 are limited. In other words, the region next to the bearing hub 6 with its greater mechanical demands can be reinforced largely without any need to extend this costly reinforcement to the parts of the tub 1, 4 in which it is unneeded.

Thus, a manufacturer has the option to produce the rear tub section 14 according to the invention (and, consequently the tub) with the same reliability at a lower cost and/or with improved reliability for the same cost.

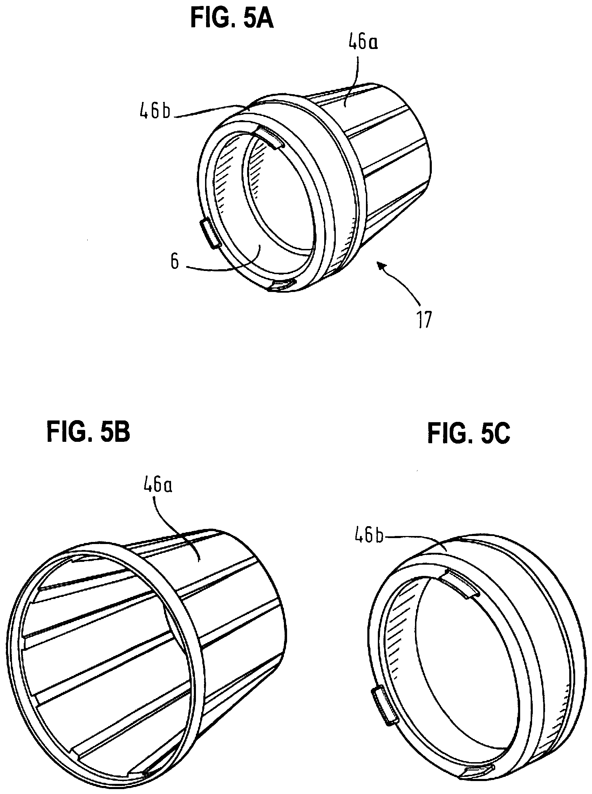

FIGURE 5A shows a bearing hub assembly 6 covered with a sleeve 17 made in two sleeve parts 46a and 46b. These sleeve parts are made by plastic injection independently as can be seen in FIGURE 5B and FIGURE 5C and are installed over the bearing hub preferably with the application of a sealant product such as silicone.

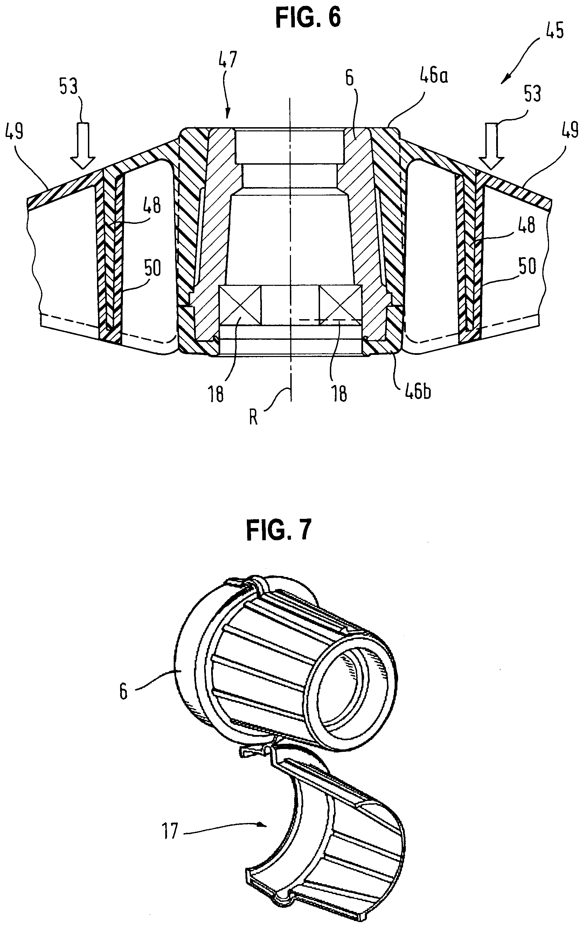

FIGURE 6 shows a rear tub section 45 according to another embodiment with the bearing including the bearing hub 6 of FIGURE 2B with a ball bearing 18 that is surrounded by a plastic sleeve 17 as in FIGURES 5A to 5C, thereby forming a hub assembly 47. The plastic sleeve part 46a now includes a bucket shaped extension 48 that extends radially from the plastic sleeve in the neighbourhood of the bearing hub 6. The remainder of the tub section 49 includes a peripheral recess 50 that serves as a receptacle for the bucket shaped extension 48. The peripheral recess 50 of the remainder of the tub section 49 can be slid over the bucket-shaped extension 48 for assembly and subsequently, welded to fasten it. The remainder of the bearing hub is closed in by the other part of the sleeve 46a.

The remainder of the tub section 49 is injection moulded through various injection moulding points 53, three in this case of which only two are shown, laid out at regular intervals around the longitudinal axis R some distance from it.

FIGURE 7 shows another embodiment of the sleeve 17 in which the two parts of the sleeve 46a and 46b are divided into mirror-image halves and come together over the bearing hub. The two parts of the sleeve are united by a thin strip that serves as a hinge. It has snap lock components that keep the hub enclosed. It also can be covered by a sealant such as silicone.

The invention is not limited to the specific embodiments described.

For example, reinforcing fillers other than talc and fibreglass may be used, such as other inorganic fibres, metal fibres or inorganic fibres. The plastic base material of the plastic sleeve and the remainder of the tub can differ. The plastic base material can be another thermoplastic material, such as PTFE or PEEK, or even a duroplastic or elastomeric material.

In general, the hub assembly can be installed with only the bearing hub present and with subsequent assembly of the ball bearing and seal (shaft seal) which permits much higher process temperatures during the injection of the remainder of the tub section. As has been shown, the ball bearings and the shaft seal are assembled Preferably before connecting with the remainder of the tub section.

In order to be able to eliminate or simplify the subsequent assembly step, the hub assembly can be moulded with the bearing hub and any additional part. As another object, only the shaft has to be installed afterwards.

### LIST OF REFERENCE NUMERALS

- 1: Tub
- 2: Drum
- 3: Front tub section
- 4: Rear tub section
- 5: Chamber
- 5a: Weld bead
- 6: Bearing hub (carrier)
- 6A: Side surface
- 6B: Front surface
- 6C: Rear surface
- 6D: Inner surface
- 7: Transmission shaft
- 8: Plastic tub region
- 9: Hub assembly
- 10: Plastic sleeve
- 11: Groove
- 12: Hub assembly
- 13: Upper part
- 14: Rear tub section
- 15: Hub assembly
- 16: Remainder of the tub section
- 17: Plastic sleeve
- 18: Ball bearing
- 19: Seal joint
- 22: Opening
- 31: Exposed edge
- 41: Exposed edge
- 45: Rear tub section
- 46a, 46b: Part of plastic sleeve
- 47: Hub assembly
- 48: Bucket shaped extension
- 49: Remainder of the tub section
- 50: Peripheral recess
- 51: Bond line
- 52: Bond line
- 53: Injection moulding point
- 60: Opening
- R: Axis of rotation

## Claims

1. Method for manufacturing a tub section (14) for a washing machine having a plastic tub (1) in which a rotating drum (2) can be internally housed, whose rotation axis (R) rests on bearings (18) provided on the internal face (6D) of a bearing hub (6) of a metallic material, wherein the tub (1) is radially mounted onto the external surface (6A) of the bearing hub (6) by a plastic injection process and, between the external surface (6A) of the bearing hub (6) and the tub (1), it has a plastic material cover (17, 46a, 46b),
**characterized in that** the method comprises the steps of
- moulding the plastic material cover (17),
- mounting the cover (17) fitted onto the external surface of the bearing hub (6), thereby forming a hub set,
- injecting the plastic tub (1) onto the hub set.

2. Method for manufacturing a tub section for a washing machine according to claim 1,
**characterized in that**
it also comprises the step, before mounting the cover (17), of applying an adhesive, in particular silicone, between the external surface (6A) of the bearing hub (6) and the internal face of the cover (17).

3. Method according to one of claims 1 and 2,
**characterized in that**
the step of moulding the cover (17) is carried out by means of a plastic extrusion process, and
the step of mounting the cover (17) is carried out by means of a thermal shrinkage process, thereby fitting the cover (17) onto the relief of the external surface (6A) of the bearing hub (6).

4. Method according to one of claims 1 and 2,
**characterized in that**
the step of moulding the cover (17) is carried out by means of a plastic injection process, thereby shaping its internal surface tongued and grooved in relation to the external surface (6A) of the bearing hub (6).

5. Tub section (14,45) for a washing machine having a plastic tub (1) in which a rotating drum (2) can be internally housed, whose rotation axis (R) rests on bearings (18) provided on the internal face (6D) of a bearing hub (6) of a metallic material, wherein the tub (1) is radially mounted onto the external surface (6A) of the bearing hub (6) by a plastic injection process and, between the external surface (6A) of the bearing hub (6) and the tub (1), it has a plastic material cover (17, 46a, 46b), and manufactured by a method comprising the steps of
- moulding the plastic material cover (17),
- mounting the cover (17) fitted onto the external surface of the bearing hub (6), thereby forming a hub set,
- injecting the plastic tub (1) onto the hub set,
**characterized in that**
the cover (17) is a thermoretractable tube (17) of a plastic material, which forms the hub set when shrink-wrapped on the bearing hub (6).

6. Tub section (14,45) for a washing machine having a plastic tub (1) in which a rotating drum (2) can be internally housed, whose rotation axis (R) rests on bearings (18) provided on the internal face (6D) of a bearing hub (6) of a metallic material, wherein the tub (1) is radially mounted onto the external surface (6A) of the bearing hub (6) by a plastic injection process and, between the external surface (6A) of the bearing hub (6) and the tub (1), it has a plastic material cover (17, 46a, 46b), and manufactured by a method comprising the steps of
- moulding the plastic material cover (17),
- mounting the cover (17) fitted onto the external surface of the bearing hub (6), thereby forming a hub set,
- injecting the plastic tub (1) onto the hub set,
**characterized in that**
the cover (17) is made by means of a plastic injection process in the manner of a tub (1) with an internal surface tongued and grooved with respect to the external surface (6A) of the bearing hub (6), and that it is closable on the bearing hub (6), thereby forming the hub set.

7. Tub section (14; 45) according to claim 6,
**characterized in that**
the cover (17) has ribs (4) on its internal surface, which provide the joining to the bearing hub (6) with a higher resistance.

8. Tub section (14; 45) according to one of claims 5 to 7,
**characterized in that**
the cover (17) covers the totality of the external surface (6A) of the bearing hub (6) and, at least, part of the opening and sealing zone of the same.

9. Tub section (14; 45) according to one of claims 5 to 8,
**characterized in that**
the material of the plastic cover (17) is of a higher resistance and quality than the one of the tub (1).

10. Washing machine comprising a tub section (14; 45) according to one of claims 5 to 9.

## Patentansprüche

1. Verfahren zum Herstellen eines Laugenbehälterteils (14) für eine Waschmaschine mit einem Laugenbehälter (1) aus Kunststoff, bei dem im Inneren eine rotierende Trommel (2) untergebracht werden kann, deren Rotationsachse (R) auf Lagern (18) ruht, die an der Innenfläche (6D) einer Lagernabe (6) aus einem Metallmaterial vorgesehen sind, wobei der Laugenbehälter (1) durch einen Kunststoffspritzgießprozess radial an der Außenfläche (6A) der Lagernabe (6) befestigt wird und zwischen der Außenfläche (6A) der Lagernabe (6) und dem Laugenbehälter (1) eine Abdeckung (17, 46a, 46b) aus Kunststoffmaterial aufweist, **dadurch gekennzeichnet, dass** das Verfahren folgende Schritte umfasst:
- Formen der Abdeckung (17) aus Kunststoffmaterial,
- Befestigen der auf die Außenfläche der Lagernabe (6) aufgezogenen Abdeckung (17), wodurch ein Nabensatz gebildet wird,
- Aufspritzen des Laugenbehälters (1) aus Kunststoff auf den Nabensatz.

2. Verfahren zum Herstellen eines Laugenbehälterteils für eine Waschmaschine nach Anspruch 1,
**dadurch gekennzeichnet, dass**
es vor dem Befestigen der Abdeckung (17) auch das Aufbringen eines Haftmittels, insbesondere von Silikon, zwischen der Außenfläche (6A) der Lagernabe (6) und der Innenfläche der Abdeckung (17) umfasst.

3. Verfahren nach einem der Ansprüche 1 und 2,
**dadurch gekennzeichnet, dass**
das Formen der Abdeckung (17) mithilfe eines Kunststoffspritzgießprozesses erfolgt und
das Befestigen der Abdeckung (17) mithilfe eines Aufschrumpfprozesses erfolgt, wodurch die Abdeckung (17) auf die Kontur der Außenfläche (6A) der Lagernabe (6) aufgezogen wird.

4. Verfahren nach einem der Ansprüche 1 und 2,
**dadurch gekennzeichnet, dass**
as Formen der Abdeckung (17) mithilfe eines Kunststoffspritzgießprozesses erfolgt, wodurch ihre Innenfläche in Bezug auf die Außenfläche (6A) der Lagernabe (6) gespundet wird.

5. Laugenbehälterteil (14, 45) für eine Waschmaschine mit einem Laugenbehälter (1) aus Kunststoff, bei dem im Inneren eine rotierende Trommel (2) untergebracht werden kann, deren Rotationsachse (R) auf Lagern (18) ruht, die an der Innenfläche (6D) einer Lagernabe (6) aus einem Metallmaterial vorgesehen sind, wobei der Laugenbehälter (1) durch einen Kunststoffspritzgießprozess radial an der Außenfläche (6A) der Lagernabe (6) befestigt ist und zwischen der Außenfläche (6A) der Lagernabe (6) und dem Laugenbehälter (1) eine Abdeckung (17, 46a, 46b) aus Kunststoffmaterial aufweist, und der mithilfe eines Verfahrens mit folgenden Schritten hergestellt ist:
- Formen der Abdeckung (17) aus Kunststoffmaterial,
- Befestigen der auf die Außenfläche der Lagernabe (6) aufgezogenen Abdeckung (17), wodurch ein Nabensatz gebildet wird,
- Aufspritzen des Laugenbehälters (1) aus Kunststoff auf den Nabensatz,
**dadurch gekennzeichnet, dass**
es sich bei der Abdeckung (17) um einen Schrumpfschlauch (17) aus einem Kunststoffmaterial handelt, der den Nabensatz bildet, wenn er auf die Lagernabe (6) aufgeschrumpft ist.

6. Laugenbehälterteil (14, 45) für eine Waschmaschine mit einem Laugenbehälter (1) aus Kunststoff, bei dem im Inneren eine rotierende Trommel (2) untergebracht sein kann, deren Rotationsachse (R) auf Lagern (18) ruht, die an der Innenfläche (6D) einer Lagernabe (6) aus einem Metallmaterial vorgesehen sind, wobei der Laugenbehälter (1) durch einen Kunststoffspritzgießprozess radial an der Außenfläche (6A) der Lagernabe (6) befestigt ist und zwischen der Außenfläche (6A) der Lagernabe (6) und dem Laugenbehälter (1) eine Abdeckung (17, 46a, 46b) aus Kunststoffmaterial aufweist, und der mithilfe eines Verfahrens mit folgenden Schritten hergestellt ist:
- Formen der Abdeckung (17) aus Kunststoffmaterial,
- Befestigen der auf die Außenfläche der Lagernabe (6) aufgezogenen Abdeckung (17), wodurch ein Nabensatz gebildet wird,
- Aufspritzen des Kunststoff-Laugenbehälters (1) auf den Nabensatz,
**dadurch gekennzeichnet, dass**
die Abdeckung (17) mithilfe eines Kunststoffspritzgießprozesses in der Art eines Laugenbehälters (1) mit einer in Bezug auf die Außenfläche (6A) der Lagernabe (6) gespundeten Innenfläche hergestellt ist und sich an der Lagernabe (6) schließen lässt, wodurch der Nabensatz gebildet wird.

7. Laugenbehälterteil (14; 45) nach Anspruch 6,
**dadurch gekennzeichnet, dass**
die Abdeckung (17) an ihrer Innenfläche Rippen (4) aufweist, die der Verbindung mit der Lagernabe (6) eine höhere Festigkeit verleihen.

8. Laugenbehälterteil (14; 45) nach einem der Ansprüche 5 bis 7,
**dadurch gekennzeichnet, dass**
die Abdeckung (17) die gesamte Außenfläche (6A) der Lagernabe (6) und zumindest einen Teil ihrer Öffnungs- und Dichtungszone abdeckt.

9. Laugenbehälterteil (14; 45) nach einem der Ansprüche 5 bis 8,
**dadurch gekennzeichnet, dass**
das Material für die Kunststoffabdeckung (17) eine höhere Festigkeit und Qualität aufweist als das für den Laugenbehälter (1).

10. Waschmaschine mit einem Laugenbehälterteil (14; 45) nach einem der Ansprüche 5 bis 9.

## Revendications

1. Procédé de fabrication d'une section de cuve (14) pour une machine à laver comportant une cuve en plastique (1), à l'intérieur de laquelle un tambour rotatif (2) peut être logé, dont l'axe de rotation (R) repose sur un palier (18) prévu sur la face intérieure (6D) d'un moyeu de roulement (6) en un matériau métallique, la cuve (1) étant montée radialement sur la surface extérieure (6A) du moyeu de roulement (6) par un processus d'injection de plastique et présentant, entre la surface extérieure (6A) du moyeu de roulement (6) et la cuve (1), un élément de recouvrement (17, 46a, 46b) en matière plastique,
**caractérisé en ce que** le procédé comprend les étapes de :
- moulage de l'élément de recouvrement (17) en matière plastique,
- montage de l'élément de recouvrement (17) ajusté sur la surface extérieure du moyeu de roulement (6), formant ainsi un ensemble moyeu,
- injection de la cuve en plastique (1) sur l'ensemble moyeu.

2. Procédé de fabrication d'une section de cuve pour une machine à laver selon la revendication 1,
**caractérisé en ce que**
il comprend également l'étape, avant le montage de l'élément de recouvrement (17), d'application d'un adhésif, en particulier de silicone, entre la surface extérieure (6A) du moyeu de roulement (6) et la face intérieure de l'élément de recouvrement (17).

3. Procédé selon l'une des revendications 1 et 2,
**caractérisé en ce que**
l'étape de moulage de l'élément de recouvrement (17) est effectuée au moyen d'un processus d'extrusion de plastique, et
l'étape de montage de l'élément de recouvrement (17) est effectuée au moyen d'un processus de retrait à la chaleur, ajustant ainsi l'élément de recouvrement (17) sur le relief de la surface extérieure (6A) du moyeu de roulement (6).

4. Procédé selon l'une des revendications 1 et 2,
**caractérisé en ce que**
l'étape de moulage de l'élément de recouvrement (17) est effectuée au moyen d'un processus d'injection de plastique, formant ainsi sa surface intérieure avec des rainures et languettes par rapport à la surface extérieure (6A) du moyeu de roulement (6).

5. Section de cuve (14, 45) pour une machine à laver comportant une cuve en plastique (1), à l'intérieur de laquelle un tambour rotatif (2) peut être logé, dont l'axe de rotation (R) repose sur un palier (18) prévu sur la face intérieure (6D) d'un moyeu de roulement (6) en un matériau métallique, la cuve (1) étant montée radialement sur la surface extérieure (6A) du moyeu de roulement (6) par un processus d'injection de plastique et présentant, entre la surface extérieure (6A) du moyeu de roulement (6) et la cuve (1), un élément de recouvrement (17, 46a, 46b) en matière plastique, et fabriquée par un procédé comprenant les étapes de
- moulage de l'élément de recouvrement (17) en matière plastique,
- montage de l'élément de recouvrement (17) ajusté sur la surface extérieure du moyeu de roulement (6), formant ainsi un ensemble moyeu,
- injection de la cuve en plastique (1) sur l'ensemble moyeu,
**caractérisé en ce que**
l'élément de recouvrement (17) est un tube thermorétractable (17) en une matière plastique, qui forme l'ensemble moyeu quand il est enveloppé par retrait sur le moyeu de roulement (6).

6. Section de cuve (14, 45) pour une machine à laver comportant une cuve en plastique (1), à l'intérieur de laquelle un tambour rotatif (2) peut être logé, dont l'axe de rotation (R) repose sur un palier (18) prévu sur la face intérieure (6D) d'un moyeu de roulement (6) en un matériau métallique, la cuve (1) étant montée radialement sur la surface extérieure (6A) du moyeu de roulement (6) par un processus d'injection de plastique et présentant, entre la surface extérieure (6A) du moyeu de roulement (6) et la cuve (1), un élément de recouvrement (17, 46a, 46b) en matière plastique, et fabriquée par un procédé comprenant les étapes de
- moulage de l'élément de recouvrement (17) en matière plastique,
- montage de l'élément de recouvrement (17) ajusté sur la surface extérieure du moyeu de roulement (6), formant ainsi un ensemble moyeu,
- injection de la cuve en plastique (1) sur l'ensemble moyeu,
**caractérisé en ce que**
l'élément de recouvrement (17) est fabriqué au moyen d'un processus d'injection de plastique à la manière d'une cuve (1) avec une surface intérieure à languettes et rainures par rapport à la surface extérieure (6A) du moyeu de roulement (6), et **en ce qu'**il peut être fermé sur le moyeu de roulement (6), formant ainsi l'ensemble moyeu.

7. Section de cuve (14 ; 45) selon la revendication 6,
**caractérisée en ce que**
l'élément de recouvrement (17) présente des nervures (4) sur sa surface intérieure, qui assurent l'assemblage avec le moyeu de roulement (6) avec une résistance plus élevée.

8. Section de cuve (14 ; 45) selon l'une des revendications 5 à 7,
**caractérisée en ce que**
l'élément de recouvrement (17) recouvre la totalité de la surface extérieure (6A) du moyeu de roulement (6) et, au moins, une partie de la zone d'ouverture et de fermeture étanche de celui-ci.

9. Section de cuve (14 ; 45) selon l'une des revendications 5 à 8,
**caractérisée en ce que**
le matériau de l'élément de recouvrement (17) en plastique est d'une résistance et d'une qualité supérieures à celui de la cuve (1).

10. Machine à laver comprenant une section de cuve (14 ; 45) selon l'une des revendications 5 à 9.
